# FASCICULE DE BREVET EUROPEEN

(11) **EP 4 000 952 B1**
(45) Date de publication et mention de la délivrance du brevet: **24.04.2024**
(21) Numéro de dépôt: 21315202.8
(22) Date de dépôt: 02.11.2021
(51) Int. Cl.: B60B 33/00, B60B 33/02

(54) **ROULETTE AUTOMATIQUEMENT ORIENTABLE AU REPOS**
ROLLE, DIE IM RUHEZUSTAND AUTOMATISCH AUSRICHTBAR IST
CASTOR ADJUSTABLE AUTOMATICALLY WHEN NON-OPERATIVE

(30) Priorité: 12.11.2020 FR 2011576
(43) Date de publication de la demande: 25.05.2022
(73) Titulaire: TENTE ROULETTES POLYMERES-BRUANDET, 39700 La Barre (FR)
(72) Inventeur: Dayt, Patrick, 25000 BESANCON (FR); Moya, Jean-Yves, 25170 LAVERNAY (FR)
(74) Mandataire: Flavenot, Bernard

(56) Documents cités:
- CH-A- 558 262
- DE-U1- 20 012 396
- FR-A1- 3 008 925
- US-A- 3 636 586

## Description

### Domaine technique

La présente invention concerne les roulettes pour meuble aptes à être automatiquement orientées au repos par rapport au meuble sur lequel elles sont montées, à savoir quand elles ne reposent pas sur le sol.

De tels meubles peuvent par exemple être des chaises ou analogues pour lesquelles il est avantageux que les roulettes soient orientées de façon prédéterminée par rapport au châssis des chaises quand ces dernières ne reposent plus sur le sol, afin que ces chaises, toutes sensiblement de même configuration, puissent s'empiler les unes sur les autres sans que les roulettes gênent, et même empêchent, cet empilement.

Il est déjà connu des roulettes, comme celle décrite et illustrée dans le FR3008925, comportant au moins un carter de roue et un pivot définissant un axe de rotation, ce pivot étant monté en coopération de rotation, par une première extrémité dans une percée réalisée dans le carter de roue et dont l'axe est coaxial avec l'axe de rotation, le pivot étant apte à être lié au meuble par sa seconde extrémité, la roue ou les roues étant alors montées en rotation autour d'un arbre dont l'axe est perpendiculaire à l'axe du pivot.

La présente invention a pour but de réaliser une roulette, apte à se trouver dans un milieu où règne une force de gravitation, qui prend une position prédéterminée par rapport au meuble qui peut la porter quand elle ne repose plus sur le sol, qui soit d'une réalisation structurelle très simple avec des éléments faciles à assembler.
Plus précisément, la présente invention a pour objet une roulette comme définie selon au moins l'une des revendications annexées aux présentes.

D'autres caractéristiques et avantages de la présente invention apparaîtront au cours de la description suivante donnée en regard des dessins annexés à titre illustratif, mais nullement limitatif, dans lesquels :
[Fig. 1] La figure 1 est une vue schématique de principe, en développement à plat, de la roulette pour meuble selon l'invention apte à être automatiquement orientée par rapport au meuble sur lequel elle est montée,
[Fig. 2] La figure 2 est une vue en écorché d'un élément essentiel de la roulette selon l'invention telle qu'elle peut être réalisée industriellement et faisant application de la représentation selon la figure 1,
[Fig. 3] La figure 3 est une vue en coupe longitudinale simplifiée de l'élément de roulette selon la figure 2, dans une autre réalisation possible, et
[Fig. 4] La figure 4 est une vue simplifiée, de côté et en écorché, de la roulette selon l'invention, faisant application de la réalisation selon la figure 3.

Il est tout d'abord précisé que, sur les figures, les mêmes références désignent les mêmes éléments, quelle que soit la figure sur laquelle elles apparaissent et quelle que soit la forme de représentation de ces éléments.

Il est aussi précisé que, dans la présente description, si l'adverbe "sensiblement" est associé à un qualificatif d'un moyen donné, ce qualificatif doit être compris au sens strict ou approché.

La présente invention est relative à une roulette pour l'aide au déplacement par roulage d'un meuble Mbl apte à se trouver dans un milieu où règne une force de gravitation et apte à reposer sur un sol via la roulette.

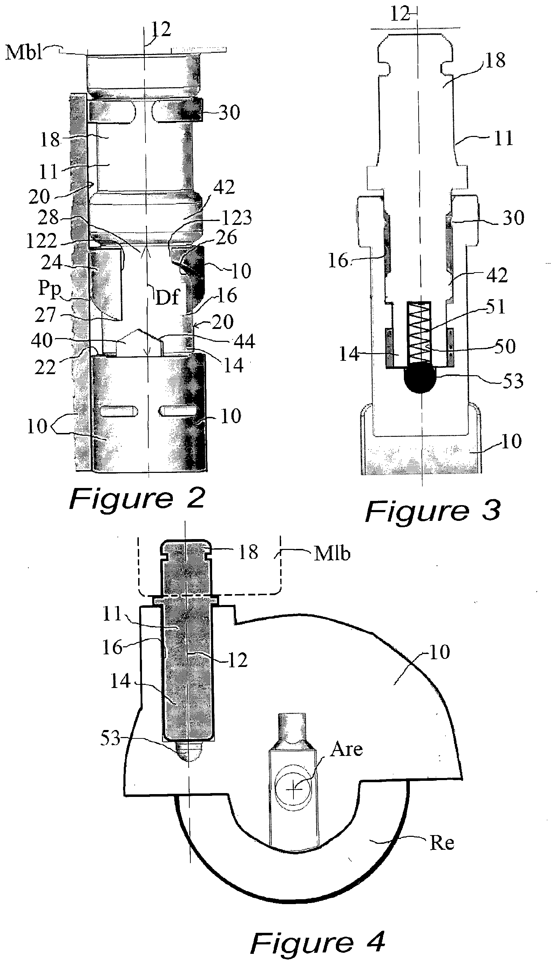

Une roulette connue, qui est évoquée dans son ensemble sur la figure 4, comporte essentiellement un carter de roue 10 qui supporte au moins une roue Re, plus généralement deux, montée rotative sur un arbre Are. Elle comporte aussi un pivot 11 de forme générale cylindrique de révolution définissant un axe de rotation 12, qui est monté, par une première extrémité 14, en coopération avec le carter de roue 10 dans une percée 16 réalisée dans celui-ci. La percée a une forme sensiblement complémentaire de celle du pivot pour que ce dernier soit apte à y pivoter, l'axe de la percée étant coaxial avec l'axe de rotation 12. Le pivot est par ailleurs apte à être lié au meuble Mbl par sa seconde extrémité 18. Il est monté dans la percée 16 de façon que son axe 12 soit perpendiculaire à l'axe de rotation Are de la roue, ou des roues, Re.

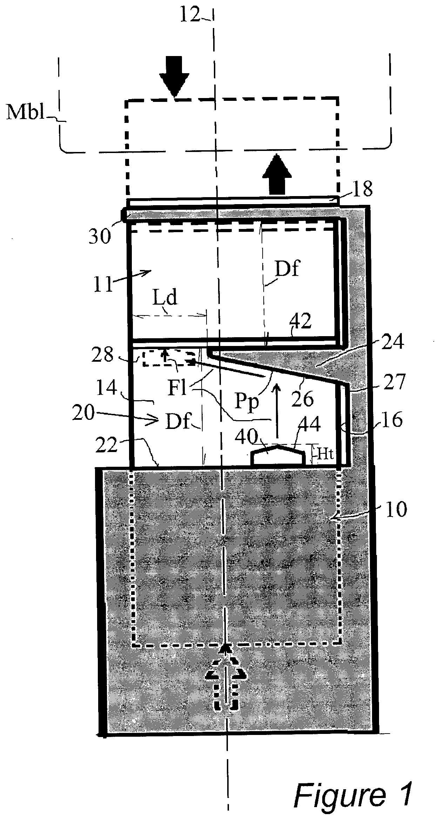

La roulette selon l'invention, en regard des quatre figures annexées (la figure 1 étant une représentation développée à plat des éléments essentiels la constituant, afin de faciliter la compréhension de sa structure), comporte un logement annulaire 20 réalisé dans la paroi de la percée 16, présentant la forme générale d'une gorge réalisée dans la paroi latérale de cette percée.

Le logement comporte, référencées sur les figures 1 et 2, une première paroi annulaire 22 faisant tout le tour de la paroi la percée 16 et étant définie dans un plan sensiblement orthogonal à l'axe de rotation 12 (cette première paroi annulaire constitue en fait le fond du logement annulaire 20), et une seconde paroi 24 définissant un pan incliné 26 par rapport à l'axe de rotation 12.

Ces deux parois 22, 24 réalisées dans la paroi latérale de la percée 16 ont le même diamètre intérieur au moins égal au diamètre du pivot 11, de préférence légèrement supérieur pour obtenir un léger jeu mécanique visant à favoriser leur déplacement par rapport au pivot, comme il sera explicité ci-après.

Le pan incliné 26 est tourné vers la première paroi 22 et présente une pente donnée Pp par rapport à l'axe 12. Quant à la seconde paroi 24, elle forme une boucle ouverte dont les extrémités libres 122, 123 (figure 2) définissent entre elles une fenêtre 28 dont la longueur, définie dans un plan perpendiculaire à l'axe de rotation 12, a une valeur Ld.

La roulette comporte en outre un ergot 40 réalisé en saillie sur et solidaire de la paroi extérieure de la première extrémité 14 du pivot 11, cet ergot ayant une longueur, prise selon une direction perpendiculaire à l'axe de rotation 12, de valeur au plus égale à la valeur Ld.

En fait, l'ergot 40 est réalisé sur le pivot 11 de façon que, quand le meuble Mbl repose sur un sol, l'ergot repose en butée sur la première paroi 22 du logement 20 et que, quand le meuble est éloigné du sol, par exemple lorsqu'il est soulevé, le carter 10, soumis à la force de gravitation, subit un déplacement relatif par rapport au pivot 11 (en réalité, il tombe), l'ergot s'éloigne de la première paroi 22 (en fait le carter 10 s'éloigne du meuble Mbl) et, lors de ce déplacement relatif, vient se loger dans la fenêtre 28 après avoir éventuellement glissé sur le pan incliné 26 de la seconde paroi 24 du logement et de ce fait entraîné la rotation du carter 10 par rapport au pivot 11.

Il est mentionné ci-dessus : « après avoir éventuellement glissé sur le pan incliné 26 ». En effet, il n'est pas impossible que, lorsque le meuble est soulevé, le pivot se trouve dans une position par rapport au carter dans laquelle l'ergot se trouve juste en regard de la fenêtre, comme représenté sur la figure 2. Dans ce cas, il se loge directement dans cette fenêtre, sans avoir dû préalablement glisser sur le pan incliné 26.

Cependant, dans le cas le plus général, il devra glisser sur le pan incliné avant d'atteindre et se loger dans la fenêtre 28, en suivant un trajet comme indiqué par les trois flèches FI représentées sur la figure 1. Il est précisé que, de façon connue, le fait que l'ergot 40 et le pan incliné 26 coopèrent entre eux par glissement comme explicité ci-dessus a pour résultat de transformer un mouvement de translation du carter 10 par rapport au pivot 11, en un mouvement de rotation du carter par rapport au pivot, car ce dernier est fixé au meuble Mbl par sa seconde extrémité 18, et le meuble, par exemple une chaise, est considéré comme fixe dans l'espace.

La description faite ci-dessous est celle de la réalisation d'une roulette selon l'invention mais, pour que cette roulette soit opérationnelle dans le temps, elle comporte en outre une butée 30 réalisée sur la paroi latérale du logement 20, opposée à la première paroi 22 par rapport à la fenêtre 28 et située à une distance Df de cette fenêtre sensiblement égale à la distance séparant cette fenêtre de la première paroi 22 ; et une contre-butée 42 réalisée en saillie sur la première extrémité du pivot 11 à une distance de l'ergot 40, prise selon l'axe de rotation 12, sensiblement égale à la distance Df, de façon que, lorsque l'ergot est arrivé dans la fenêtre 28, il y reste et ne la traverse pas, la butée 30 étant en butée sur la contre-butée 42.

De façon très avantageuse, pour faciliter le glissement de l'ergot 40 sur le pan incliné 26, l'ergot 40 présente au moins une face inclinée 44 tournée vers la seconde extrémité 18 du pivot 11, cette face inclinée 44 ayant une pente, par rapport à l'axe de rotation 12, sensiblement complémentaire de la pente Pp.

De façon très avantageuse, et très préférentielle, le point 27 du pan incliné 26 qui est le plus près de la première paroi 22 est à une distance de cette première paroi au moins égale à la hauteur hors-tout Ht de l'ergot 40 (de préférence légèrement supérieure), cette hauteur hors-tout étant prise selon une direction parallèle à l'axe de rotation 12. Cette caractéristique structurelle est importante, pour permettre au carter 10 avec les deux roues Re de se déplacer en rotation de 360 degrés autour de.l'axe de rotation 12, comme cela est nécessaire pour déplacer par roulage, sur tout sol, le meuble Mbl sur lequel est montée la roulette. Car cette caractéristique structurelle permet alors au point 27, défini ci-dessus, du pan incliné 26 de passer sans gêne au-dessus du point le plus haut de l'ergot 40, lorsque le carter 10 pivote d'un tour complet et que le meuble appuie de tout son.poids sur le carter.

De façon préférentielle, la roulette comporte en outre des moyens élastiques montés en coopération entre le pivot et le carter (figure 3) pour créer une force additionnelle à la force de gravitation. Ces moyens élastiques sont avantageusement constitués par un ressort en compression 51 dont une extrémité est montée dans un orifice 50 réalisé dans la première extrémité 14 du pivot selon un axe sensiblement confondu avec l'axe de rotation 12, son autre extrémité étant en appui sur le fond de la percée 16. De façon encore plus préférentielle, le ressort 51 coopère avec le fond de la percée via une bille 53 pour faciliter la rotation du carter par rapport au pivot.

En outre, pour que la roulette soit facilement réalisable industriellement, notamment lors de l'assemblage de ses éléments constitutifs, la butée 30 est constituée par un joint élastiquement déformable, du type clip, que les techniciens désignent sous la dénomination « Godron ».

De cette façon, la roulette est par exemple assemblée en introduisant le pivot dans la percée 16, sans le joint de Godron, jusqu'à ce que l'ergot 11 atteigne sa position finale sur la première paroi 22 (figure 2) après avoir traversé la fenêtre 28, puis le joint de Godron est mis en place, par exemple en le fixant dans une rainure ou des picots sur la paroi latérale du logement 20, pour qu'il constitue la butée 30 comme définie ci-dessus. En alternative, le joint peut être réalisé d'une seule pièce avec le carter, et le pivot est alors introduit en force pour obliger l'ergot à traverser le joint en utilisant l'élasticité naturelle des matériaux, notamment des matériaux plastiques, dans lesquels sont généralement réalisés les carters, alors que le pivot est, en général, en métal.

Le fonctionnement de la roulette selon l'invention apparaît à l'évidence lors de lecture de la description faite ci-dessus. Son mode de fonctionnement ne sera donc pas plus amplement décrit ici.

Il est simplement précisé qu'une telle roulette présente un intérêt certain, lorsque par exemple où elle est montée sur un meuble Mbl comme une chaise ou analogue. Dans ce cas, le pivot 11 est fixé sur un pied de la chaise par sa seconde extrémité 18 de façon que la position que prend le carter 10 par rapport au pivot 11, quand l'ergot 40 est logé dans la fenêtre 28, est telle que ce carter avec la ou les roues soit en dehors du volume enveloppant la chaise sans la ou les roulettes. De cette façon toutes les chaises de même configuration peuvent facilement être empilées les unes sur les autres sans que les roulettes fassent obstacle à cet empilement.

## Revendications

1. Roulette pour l'aide au déplacement par roulage d'un meuble (Mbl) lorsqu'il est apte à se trouver dans un milieu où règne une force de gravitation et qu'il est apte à reposer sur un sol via la roulette, cette dernière comportant au moins un carter de roue (10) et un pivot (11) de forme générale cylindrique de révolution définissant un axe de rotation (12), ledit pivot étant monté, par une première extrémité (14), en coopération avec ledit carter de roue (10) dans une percée (16) réalisée dans celui-ci, ladite percée ayant une forme sensiblement complémentaire de celle dudit pivot pour que ce dernier soit apte à y pivoter, l'axe de ladite percée étant coaxial avec ledit axe de rotation (12), ledit pivot étant apte à être lié au meuble par sa seconde extrémité (18), la roulette comportant:
• un logement annulaire (20) réalisé dans la paroi de ladite percée (16), ledit logement comportant :
- une première paroi (22) faisant tout le tour de la paroi ladite percée (16) et étant définie dans un plan sensiblement orthogonal audit axe de rotation (12), la roulette étant **caractérisée par le fait qu'**elle comporte:
- une seconde paroi (24) définissant un pan incliné (26) par rapport audit axe de rotation (12), ledit pan incliné étant tourné vers la première paroi et ayant pente donnée Pp, cette seconde paroi formant une boucle ouverte dont les extrémités libres (122, 123) définissent une fenêtre (28) dont la longueur, définie dans un plan perpendiculaire audit axe de rotation (12), a une valeur Ld,
• un ergot (40) réalisé en saillie sur et solidaire de la paroi extérieure de la première extrémité (14) dudit pivot (11), cet ergot ayant une longueur, prise selon une direction perpendiculaire audit axe de rotation (12), de valeur au plus égale à la valeur Ld,
• ledit ergot (40) étant réalisé sur ledit pivot (11) de façon que, quand ledit meuble (Mbl) repose sur un sol, ledit ergot repose sur la première paroi (22) du logement (20) et que, quand ledit meuble est éloigné du sol, le carter (10) subissant alors un déplacement relatif par rapport au pivot (11), ledit ergot s'éloigne de la première paroi (22) et, lors de ce déplacement relatif, vient se loger dans ladite fenêtre (28) après avoir éventuellement glissé sur le pan incliné (26) de la seconde paroi (24) du logement et de ce fait entraîné la rotation du carter (10) par rapport au pivot (11).

2. Roulette selon la revendication 1, **caractérisée par le fait qu'**elle comporte en outre :
• une butée (30) réalisée sur la paroi latérale du logement (20), ladite butée étant opposée à la première paroi (22) par rapport à ladite fenêtre (28) et à une distance Df de ladite fenêtre sensiblement égale à la distance séparant cette dite fenêtre (28) de ladite première paroi (22), et
• une contre-butée (42) réalisée en saillie sur la première extrémité du pivot (11) à une distance dudit ergot, prise selon ledit axe de rotation, sensiblement égale à la distance Df, de façon que, lorsqu'il est arrivé dans la fenêtre (28), l'ergot y reste, grâce à la butée (30) qui est en butée sur la contre-butée (42).

3. Roulette selon l'une des revendications 1 et 2, **caractérisée par le fait que** ledit ergot (40) présente au moins une face inclinée (44) tournée vers la seconde extrémité (18) du pivot (11), cette face inclinée (44) ayant une pente, par rapport audit axe de rotation, sensiblement complémentaire de ladite pente Pp.

4. Roulette selon l'une des revendications précédentes, **caractérisée par le fait que** le point (27) du pan incliné (26) qui est le plus près de la première paroi (22) est à une distance de cette première paroi au moins égale à la hauteur hors-tout Ht dudit ergot (40), cette hauteur hors-tout étant prise selon une direction parallèle audit axe de rotation (12).

5. Roulette selon l'une des revendications précédentes, **caractérisée par le fait qu'**elle comporte des moyens élastiques montés en coopération entre le pivot et le carter.

6. Roulette selon la revendication 5, **caractérisée par le fait que** les moyens élastiques montés en coopération entre le pivot et le carter sont constitués par un ressort en compression (51) dont une extrémité est montée dans un orifice (50) réalisé dans la première extrémité (14) du pivot selon un axe sensiblement confondu avec ledit axe de rotation (12), son autre extrémité étant en appui sur le fond de la percée (16).

7. Roulette selon la revendication 6, **caractérisée par le fait que** ledit ressort (51) coopère avec le fond de ladite percée via une bille (53).

8. Roulette selon l'une des revendications précédentes, **caractérisée par le fait que** la butée (30) est constituée par un joint élastiquement déformable dit de « Godron ».

## Patentansprüche

1. Rolle als Hilfsmittel zum Verrücken eines Möbelstücks (Mbl) durch Wegrollen, wenn diese geeignet ist, sich in einer Umgebung zu befinden, in der eine Schwerkraft wirkt, und wenn diese geeignet ist, als Laufrolle auf einen Boden gesetzt zu sein, wobei letztere mindestens ein Radgehäuse (10) und einen Drehzapfen (11) von allgemein zylindrischer Rotationsform umfasst, der eine Drehachse (12) definiert, wobei der Drehzapfen montiert ist mit einem ersten Ende (14) in Zusammenwirkung mit dem Radgehäuse (10) in einer in diesem ausgebildeten Ausnehmung (16), wobei die Ausnehmung eine Form hat, die im Wesentlichen komplementär zu der des Drehzapfens ist, damit dieser darin schwenkbar ist, wobei die Achse der Ausnehmung koaxial zur Drehachse (12) ist, wobei der Drehzapfen mit seinem zweiten Ende (18) mit dem Möbelstück verbindbar ist, wobei die Rolle umfasst:
- eine ringförmige Aufnahme (20), die in der Wandung der Ausnehmung (16) ausgebildet ist, wobei die Aufnahme umfasst:
- eine erste Wand (22), die um die gesamte Wandung der Ausnehmung (16) herum verläuft und in einer Ebene definiert ist, die im Wesentlichen orthogonal zur Drehachse (12) verläuft,
wobei die Rolle **dadurch gekennzeichnet ist, dass** sie Folgendes umfasst:
- eine zweite Wand (24), die eine geneigte Fläche (26) in Bezug auf die i Drehachse (12) definiert, wobei die geneigte Fläche der ersten Wand zugewandt ist und eine gegebene Neigung Pp aufweist, wobei diese zweite Wand einen offenen Kanal bildet, dessen freien Enden (122, 123) ein Fenster (28) definieren, dessen Länge, definiert in einer Ebene senkrecht zur Drehachse (12), einen Wert Ld hat,
- einen Vorsprung (40), der hervorstehend an der Außenwand des ersten Endes (14) des Drehzapfens (11) ausgeführt und mit dieser fest verbunden ist, wobei dieser Vorsprung eine in einer zur Drehachse (12) senkrechten Richtung genommene Länge einen Wert hat, der höchstens gleich dem Wert Ld ist,
- der Vorsprung (40) an dem Drehzapfen (11) so ausgebildet ist, dass, wenn das Möbelstück (Mbl) auf einem Boden steht, der Vorsprung auf der ersten Wand (22) des Gehäuses (20) ruht, und dass, wenn das Möbelstück vom Boden entfernt ist, das Gehäuse (10) dann eine relative Verschiebung in Bezug auf den Drehzapfen (11) erfährt, der Vorsprung sich von der ersten Wand (22) entfernt und bei dieser relativen Verschiebung in dem Fenster (28) zu liegen kommt, nachdem er eventuell auf der geneigten Fläche (26) der zweiten Wand (24) des Gehäuses geglitten ist und dadurch die Drehung des Gehäuses (10) in Bezug auf den Drehzapfen (11) bewirkt hat.

2. Rolle nach Anspruch 1, **dadurch gekennzeichnet, dass** diese weiterhin umfasst:
- einen Anschlag (30), der an der Seitenwand der Aufnahme (20) ausgeführt ist, wobei der Anschlag der ersten Wand (22) in Bezug auf das Fenster (28) gegenüberliegt und sich in einem Abstand Df von dem Fenster befindet, der im Wesentlichen gleich dem Abstand ist, der dieses Fenster (28) von der ersten Wand (22) trennt, und
- einen Gegenanschlag (42), der vorspringend am ersten Ende des Drehzapfens (11) in einem Abstand von dem Zapfen ausgeführt ist, der entlang der Drehachse genommen im Wesentlichen gleich dem Abstand Df ist, so dass der Zapfen, wenn er in dem Fenster (28) angekommen ist, dank des Anschlags (30), der an dem Gegenanschlag (42) anliegt, dort verbleibt.

3. Rolle nach einem der Ansprüche 1 und 2, **dadurch gekennzeichnet, dass** der Vorsprung (40) mindestens eine geneigte Fläche (44) aufweist, die dem zweiten Ende (18) des Drehzapfens (11) zugewandt ist, wobei diese geneigte Fläche (44) in Bezug auf die Drehachse eine Neigung aufweist, die im Wesentlichen komplementär zu der Neigung Pp ist.

4. Rolle nach einem der vorhergehenden Ansprüche, **dadurch gekennzeichnet, dass** der Ort (27) der geneigten Fläche (26), der der ersten Wand (22) am nächsten liegt, in einem Abstand von dieser ersten Wand liegt, der mindestens gleich der Gesamthöhe Ht dieses Vorsprungs (40) ist, wobei diese Gesamthöhe in einer Richtung parallel zur Drehachse (12) genommen wird.

5. Rolle nach einem der vorhergehenden Ansprüche, **dadurch gekennzeichnet, dass** sie elastische Mittel aufweist, die in Zusammenwirkung zwischen dem Drehzapfen und dem Gehäuse angebracht sind.

6. Rolle nach Anspruch 5, **dadurch gekennzeichnet, dass** die elastischen Mittel, die in Zusammenwirkung zwischen dem Drehzapfen und dem Gehäuse montiert sind, mit einer Druckfeder (51) ausgebildet sind, deren eines Ende in einem Loch (50) montiert ist, das in dem ersten Ende (14) des Drehzapfens entlang einer Achse ausgebildet ist, die im Wesentlichen mit der Drehachse (12) zusammenfällt, wobei sein anderes Ende auf dem Boden der Ausnehmung (16) anstößt.

7. Rolle nach Anspruch 6, **dadurch gekennzeichnet, dass** die Feder (51) über eine Kugel (53) mit dem Boden der Ausnehmung zusammenwirkt.

8. Rolle nach einem der vorhergehenden Ansprüche, **dadurch gekennzeichnet, dass** der Anschlag (30) aus einer elastisch verformbaren Fuge, genannt "Godron", gebildet ist.

## Claims

1. Castor for assisting with the movement by rolling of a piece of furniture (Mbl) when it is capable of being located in an environment, where a gravitational force is present, and that it is capable of resting on a floor via the castor, the latter comprising at least one wheel casing (10) and a generally cylindrically-shaped revolving pivot (11) defining an axis of rotation (12), said pivot being mounted, by a first end (14), engaged with said wheel casing (10) in an opening (16) made in it, said opening having a shape, substantially complementary to that of said pivot such that the latter is capable of pivoting there, the axis of said opening being coaxial with said axis of rotation (12), said pivot being capable of being linked to the furniture by its second end (18), the castor comprising
• an annular housing (20) made in the wall of said opening (16), said housing comprising:
- a first wall (22) rotating all around the wall of said opening (16) and being defined in a plane substantially orthogonal to said axis of rotation (12), the castor being **characterised by** the fact that it comprises:
- a second wall (24) defining a section (26) inclined with respect to said axis of rotation (12), said inclined section being rotated towards the first wall and having a given slope Pp, this second wall forming an open loop, the free ends (122, 123) of which define a window (28), the length of which, defined in a plane perpendicular to said axis of rotation (12), has a value Ld,
• a lug (40) made projecting over and integral with the outer wall of the first end (14) of said pivot (11), this lug having a length, taken in a direction perpendicular to said axis of rotation (12), of value at most equal to the value Ld,
• said lug (40) being made on said pivot (11) such that, when said furniture (Mbl) rests on a floor, said lug rests on the first wall (22) of the housing (20) and that, when said furniture is distant from the floor, the casing (10) thus undergoing a relative movement with respect to the pivot (11), said lug moves away from the first wall (22) and, during this relative movement, is housed in said window (28) after having optionally slid over the inclined section (26) of the second wall (24) of the housing, and due to this, driven the rotation of the casing (10) with respect to the pivot (11).

2. Castor according to claim 1, **characterised by** the fact that it further comprises:
• an abutment (30) made on the side wall of the housing (20), said abutment being opposite the first wall (22) with respect to said window (28) and at a distance Df from said window, substantially equal to the distance separating this said window (28) from said first wall (22), and
• a counter-abutment (42) made projecting over the first end of the pivot (11) at a distance from said lug, taken about said axis of rotation, substantially equal to the distance Df, such that, when it arrives in the window (28), the lug remains there, thanks to the abutment (30) which is abutted on the counter-abutment (42).

3. Castor according to one of claims 1 and 2, **characterised by** the fact that said lug (40) has at least one inclined face (44) rotated towards the second end (18) of the pivot (11), this inclined face (44) having a slope, with respect to said axis of rotation, substantially complementary to said slope Pp.

4. Castor according to one of the preceding claims, **characterised by** the fact that the point (27) of the inclined section (26) which is nearest to the first wall (22) is at a distance from this first wall, at least equal to the overall height Ht of said lug (40), this overall height being taken in a direction parallel to said axis of rotation (12),

5. Castor according to one of the preceding claims, **characterised by** the fact that it comprises elastic means, engagingly mounted between the pivot and the casing.

6. Castor according to claim 5, **characterised by** the fact that the elastic means engagingly mounted between the pivot and the casing are constituted by a compression spring (51), an end of which is mounted in an orifice (50) made in the first end (14) of the pivot about an axis substantially combined with said axis of rotation (12), its other end bearing on the bottom of the opening (16).

7. Castor according to claim 6, **characterised by** the fact that said spring (51) engages with the bottom of said opening via a ball (53).

8. Castor according to one of the preceding claims, **characterised by** the fact that the abutment (30) is constituted by a so-called "Godron" elastically deformable seal.
